# FASCICULE DE BREVET EUROPEEN

(11) **EP 1 408 247 B1**
(45) Date de publication et mention de la délivrance du brevet: **09.08.2006**
(21) Numéro de dépôt: 03292289.0
(22) Date de dépôt: 17.09.2003
(51) Int. Cl.: F16C 19/16, B62D 1/16

(54) **Dispositif de palier à roulement précontraint et ensemble mécanique comprenant un tel dispositif**
Vorgespannte Wälzlagervorrichtung und Anordnung mit einer derartigen Vorrichtung
Prestressed roller bearing device and assembly comprising such a device

(30) Priorité: 20.09.2002 FR 0211682
(43) Date de publication de la demande: 14.04.2004
(73) Titulaire: Aktiebolaget SKF, 415 50 Göteborg (SE)
(72) Inventeur: Delos, Jacques, 77500 Chelles (FR); Montboeuf, Bruno, 37390 Cerelles (FR)
(74) Mandataire: Casalonga, Axel

(56) Documents cités:
- FR-A- 2 718 803
- FR-A- 2 806 135
- US-A- 4 541 742
- US-A- 4 901 987
- US-A- 5 829 891

## Description

La présente invention concerne un dispositif de palier à roulement précontraint, et un ensemble mécanique comprenant un tel dispositif, et notamment un ensemble mécanique pour la fixation d'une colonne de direction de véhicule automobile.

Un système de colonne de direction de véhicule automobile comprend généralement une colonne montée à rotation dans un logement tubulaire au moyen de deux roulements à contacts obliques en opposition. Les roulements sont généralement précontraints, par exemple à l'aide d'un ressort hélicoïdal, afin que les roulement puissent fonctionner sans jeu sous des charges axiales et radiales

On connaît par le document FR-2 718 803 une cartouche perfectionnée à roulement à contact oblique comprenant un boîtier contenant un roulement avec une bague intérieure et une bague extérieure et un anneau destiné à venir en contact avec une portée intérieure de la bague intérieure. Un ressort hélicoïdal est prévu pour venir en appui sur l'anneau pour exercer une précontrainte sur le roulement, en étant en appui du côté opposé sur une surface radiale liée à la colonne

Néanmoins, une telle cartouche à roulement ne donne pas entièrement satisfaction. Une telle cartouche à roulement comprend un nombre important de pièces séparées, ce qui complique une gestion de l'approvisionnement et du stockage de pièces séparées, au moment du montage du système de colonne de direction. Par ailleurs, la manipulation de la cartouche à roulement pendant son montage est plus difficile pour un opérateur, car des pièces peuvent tomber. En outre, une telle cartouche à roulement accompagnée d'un ressort de précontrainte est encombrante axialement.

Le document FR 2 806 135 décrit un palier à roulement, notamment pour colonne de direction de véhicules automobiles, du type comprenant une bague extérieure pourvue d'un chemin de roulement, une bague intérieure pourvue d'un chemin de roulement, une rangée d'éléments roulants disposés entre les chemins de roulement desdites bagues, une bague due tolérance destinée à assurer la liaison de la bague intérieure avec un arbre de la colonne de direction, et un élément d'amortissement disposé en contact avec la bague de tolérance, à l'extrémité axiale du palier opposée aux éléments roulants. L'élément d'amortissement est mobile axialement par rapport à la bague de tolérance. Le palier comprend également une rondelle élastique axialement disposée entre l'élément d'amortissement et la bague de tolérance.

La présente invention a pour objet un dispositif de palier à roulement précontraint, comprenant des moyens intégrés de mise en précontrainte du palier à roulement, obtenus sous la forme d'un ensemble modulaire pouvant être manipulé facilement par un opérateur lors de son montage.

La présente invention a encore pour objet un dispositif de palier à roulement précontraint pouvant être facilement adapté dans différents ensembles mécaniques, notamment des ensembles mécaniques pour le montage de colonne de direction.

La présente invention également pour objet un dispositif de palier à roulement précontraint, simple, et de fabrication peu coûteuse.

L'invention est définie par les caractéristiques de la revendication 1.

Un tel dispositif de palier à roulement précontraint, notamment pour colonne dé direction de véhicule automobile, comprend une bague extérieure munie d'un chemin de roulement, une bague intérieure munie d'un chemin de roulement, et des éléments roulants disposés entre les chemins de roulement des bagues intérieure et extérieure, une couronne d'appui mobile axialement par rapport aux bagues intérieures et extérieures, une bague de tolérance et un élément élastique. L'élément élastique est disposé entre la couronne d'appui et une surface d'appui associée à la bague extérieure pour exercer un effort axial d'écartement entre la couronne d'appui et la bague extérieure, un écartement axial entre la couronne d'appui et la bague extérieure étant limité par des moyens de retenue associés à la bague intérieure. La bague de tolérance traverse la bague intérieure pour la liaison de la bague intérieure avec un arbre, la bague de tolérance traversant la couronne d'appui et comprend des moyens de retenue de la couronne d'appui du côté de la couronne d'appui opposé à la bague intérieure. La bague de tolérance comprend un bourrelet radial du côté de la bague intérieure opposé à la couronne.

D'autres caractéristiques de l'invention sont definies dans les revendications dépendantes.

La couronne d'appui mobile axialement et l'élément élastique disposé entre la couronne et une surface d'appui associée à la bague extérieure permettent, selon la distance axiale entre la couronne d'appui et la bague extérieure et la longueur à l'état libre de l'élément élastique, d'exercer un effort axial de précontrainte sur la bague extérieure. La couronne d'appui permet de venir en appui sur un élément d'un logement, par exemple un logement tubulaire de colonne de direction. La couronne d'appui peut facilement être adaptée selon le logement avec lequel la couronne d'appui doit coopérer.

Selon l'invention un écartement axial entre la couronne d'appui et la bague extérieure est limité par des moyens de retenue associés à la bague intérieure. Ainsi, l'élément élastique tend à écarter la couronne d'appui par rapport à la bague extérieure, les moyens de retenue associés à la bague intérieure empêchant néanmoins un écartement de la couronne d'appui par rapport à la bague extérieure au-delà d'une certaine limite. Dès lors, la couronne d'appui, bien qu'étant mobile, est retenue, de sorte que l'on obtient le dispositif de palier à roulement sous la forme d'un ensemble modulaire comprenant le palier à roulement, la couronne d'appui et l'élément élastique. Selon l'écartement entre la couronne d'appui et la bague extérieure autorisé par les moyens de retenue, un effort axial de précontrainte peut être exercé sur le palier à roulement.

De préférence, la couronne d'appui et l'élément élastique sont situés axialement entre les moyens de retenus associés à la bague intérieure et une portion de la bague intérieure présentant le chemin de roulement prévu pour un contact oblique et orienté du côté des moyens de retenue.

Dans un mode de réalisation, les moyens de retenue se présentent sous la forme de crochets dirigés vers l'extérieur à partir d'une extrémité de la bague de tolérance.

Le bourrelet radial est destiné à venir en contact axial avec la bague intérieure, de façon qu'en cas d'application d'un effort axial entre la bague intérieure et la bague de tolérance, ceci provoque une déformation radialement vers l'intérieur de la bague de tolérance pour serrer un arbre entouré par la bague de tolérance et compenser ainsi des jeux radiaux.

Dans un mode de réalisation, la bague extérieure est disposée dans un manchon extérieur prévu pour être ajusté dans un logement tubulaire. Le manchon extérieur entourant la bague extérieure forme une interface entre la bague extérieure et un logement tubulaire dans lequel le dispositif de palier à roulement doit être inséré. Le manchon extérieur peut être obtenu facilement dans une matière synthétique moulée par injection. Dès lors, une adaptation du dispositif de palier à roulement peut être facilement obtenue en faisant varier le diamètre du manchon extérieur en fonction d'un diamètre intérieur du logement. Dès lors, on peut utiliser des paliers à roulement munis de bagues extérieures standards.

Dans un mode de réalisation, l'élément élastique est en appui sur une surface du manchon extérieur orientée du côté de la couronne d'appui. Le manchon extérieur peut être facilement muni de surfaces permettant une coopération satisfaisante avec un élément élastique, notamment une surface radiale d'appui adaptée pour l'application d'un effort axial.

Dans un mode de réalisation, la couronne d'appui comprend une surface d'appui prévue pour un contact avec un support et orientée du côté opposé au palier à roulement.

Dans un mode de réalisation, l'élément élastique est un ressort hélicoïdal. Le ressort hélicoïdal peut comprendre des spires munies d'ondulations avec contact crête à crête desdites ondulations. Un tel ressort permet l'application d'un effort axial important avec une déformation axiale faible. Dès lors, on peut utiliser un ressort de longueur axiale faible favorisant la compacité du dispositif de palier à roulement précontraint. Il permet en outre d'exercer un effort axial sensiblement constant en fonction de la déformation axiale du ressort.

La présente invention concerne également un ensemble mécanique comprenant une colonne, un logement tubulaire, un palier à roulement disposé entre le logement tubulaire et la colonne, le logement tubulaire et la colonne comprenant des moyens de retenue du palier à roulement, et un dispositif de palier à roulement précontraint, selon un aspect de l'invention, disposé entre le logement tubulaire et la colonne.

Dans un mode de réalisation, la couronne d'appui du dispositif de palier à roulement précontraint est en contact du côté opposé à la bague extérieure avec une surface d'arrêt du logement tubulaire, la bague intérieure étant retenue sur la colonne du côté opposé à la couronne d'appui par l'intermédiaire d'une rondelle-frein. En modifiant la position de la rondelle-frein, on peut modifier la position relative entre la couronne d'appui bloquée par la surface d'arrêt et le palier à roulement du dispositif de palier à roulement pour assurer une déformation de l'élément élastique permettant l'application d'un effort de précontrainte suffisant.

La présente invention et ses avantages seront mieux compris à l'étude de la description détaillée d'un mode de réalisation pris à titre d'exemple nullement limitatif, et illustré par les dessins annexés, sur lesquels :
la figure 1 est une vue en coupe axiale d'un dispositif de palier à roulement précontraint, selon un aspect de l'invention ; et
la figure 2 est une vue en coupe axiale d'un ensemble mécanique pour le montage d'une colonne de direction dans un logement tubulaire comprenant un dispositif de palier à roulement, selon la figure 1.

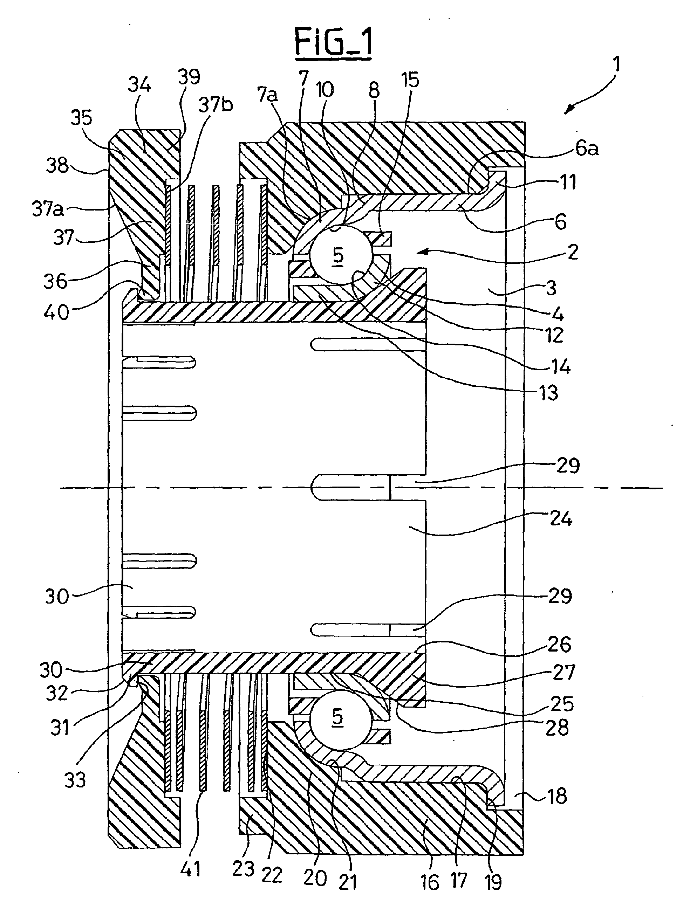

Sur la figure 1, un dispositif de palier à roulement précontraint, référencé 1 dans son ensemble, comprend un palier à roulement 2 comprenant une bague extérieure 3, une bague intérieure 4, et des éléments roulants 5.

La bague extérieure 3 comprend une portion tubulaire 6, et une portion toroïdale 7 située à une extrémité axiale de la portion tubulaire 6, la portion toroïdale 7 étant recourbée vers l'intérieur, et présentant en section un profil sensiblement en quart de cercle. La portion toroïdale 7 présente un diamètre extérieur inférieur au diamètre de la portion tubulaire 6. La portion toroïdale 7 est reliée par son bord de plus grand diamètre à une extrémité de la portion tubulaire 6 par l'intermédiaire d'une portion de liaison 8. La portion toroïdale 7 présente sur une surface intérieure un chemin de roulement toroïdal 10 orienté radialement vers l'intérieur et axialement du côté de la portion tubulaire 6. La bague extérieure 3 comprend une collerette d'arrêt 11 s'étendant radialement vers l'extérieur à partir de l'extrémité de la portion tubulaire 6 opposée à la portion toroïdale 7.

La bague intérieure 4 comprend une portion toroïdale 12 présentant en section un profil sensiblement en quart de cercle à concavité orientée vers l'extérieur, et une portion axiale 13 prolongeant axialement la portion toroïdale 12 à partir de son bord de moindre diamètre. La portion toroïdale 12 présente sur sa surface extérieure un chemin de roulement toroïdal 14 orienté radialement vers l'extérieur et axialement du côté de la portion axiale 13.

La bague extérieure 4 entoure la bague intérieure 3. Les bagues intérieure 3 et extérieure 4 sont disposées axialement de façon que le chemin de roulement 14 de la bague intérieure 4 soit orienté en regard du chemin de roulement toroïdal 10 de la bague extérieure 3.

Les éléments roulants 5, ici des billes, sont disposés entre les chemins de roulement 10 et 14 des bagues extérieure 3 et intérieure 4. Les éléments roulants 5 sont maintenus circonférentiellement espacés régulièrement par une cage 15. Les portions toroïdales 7, 12 des bagues extérieure 3 et intérieure 4 permettent la formation d'un palier à roulement à contact oblique.

Les bagues intérieure 4 et extérieure 3 peuvent être facilement obtenues par emboutissage.

Le dispositif de palier à roulement précontraint 1 comprend un manchon extérieur 16 entourant la bague extérieure 3. Le manchon extérieur 16 comprend une surface intérieure sensiblement en concordance de forme avec la bague extérieure 3. Le manchon extérieur 16 comprend un alésage 17 en contact avec une surface extérieure cylindrique 6a de la portion tubulaire 6 de la bague extérieure 3.

Du côté de la collerette d'arrêt 11 de la bague extérieure 3, l'alésage 17 du manchon intérieur 16 comprend un dégagement annulaire 18 présentant un diamètre intérieur supérieur au diamètre extérieur de la collerette d'arrêt 11 pour permettre son passage axialement, et formant un épaulement radial 19 sur lequel la collerette d'arrêt 11 vient en appui axialement.

Du côté axialement opposé au dégagement annulaire 18, le manchon extérieur 16 comprend un bourrelet 20 s'étendant radialement vers l'intérieur à partir de l'alésage 17 du manchon extérieur 16, et comprenant une surface intérieure 21 sensiblement toroïdale, en concordance de forme avec une surface extérieure 7a de la portion toroïdale 7 de la bague extérieure 3. Le bourrelet 20 comprend du côté opposé à la portion toroïdale 7 une surface radiale d'appui 22.

Le manchon extérieur 16 comprend du côté du bourrelet 20 une nervure annulaire axiale 23 s'étendant axialement à partir de l'extrémité du manchon intérieur 16. La nervure axiale 23 est de diamètre supérieur au diamètre extérieur de la surface d'appui 22 du bourrelet 20.

Le dispositif de palier à roulement 1 comprend également un manchon intérieur sous la forme d'une bague de tolérance 24 de forme générale tubulaire. La bague de tolérance 24 traversant la bague intérieure 4 et comprend une surface extérieure cylindrique 25 et un alésage 26 également cylindrique.

La bague de tolérance 24 comprend un bourrelet radial 27 en saillie vers l'extérieur et présentant une portion de surface extérieure conique 28 destinée à venir en contact avec la portion toroïdale 12 de la bague intérieure 4. La bague de tolérance 24 est munie du côté du bourrelet radial 27 de lumières 29 axiales et débouchant à l'extrémité de la bague de tolérance 24. Les lumières 29 séparent le bourrelet radial 27 en secteurs angulaires. Les lumières ou encoches axiales 29 permettent une élasticité radiale de l'extrémité de la bague de tolérance du côté du bourrelet radial 27. Cette élasticité radiale permet à la bague de tolérance 24 de s'adapter aux dimensions diamétrales de l'arbre sur lequel la bague de tolérance viendra se monter et de venir serrer ledit arbre par effet de coin provoqué par un effort axial tendant à pressé la surface conique 28 contre la bague intérieure 4.

Du côté de la bague de tolérance 24 opposé au bourrelet radial 27, la bague de tolérance 24 s'étend sous la forme d'un portion intermédiaire tubulaire axialement au-delà de l'extrémité libre de la portion axiale 13 de la bague intérieure 4. La bague de tolérance 24 comprend des moyens de retenue sous la forme de languettes 30 élastiques radialement. Les languettes 30 sont formées entre des ouvertures axiales ménagées dans l'extrémité de la bague de tolérance 24. Les languettes 30 sont munies à leurs extrémités libres de crochets 31 s'étendant radialement vers l'extérieur et comprenant une surface inclinée orientée axialement du côté opposé au bourrelet radial 27 et radialement vers l'extérieur et des surfaces radiales 33 orientées du côté du bourrelet 27.

Le dispositif de palier à roulement 1 comprend une couronne d'appui 34 comprenant une portion extérieure 35 de plus grand diamètre, épaisse axialement, et une portion intérieure 36 de moindre diamètre, mince axialement. Les portions extérieure 35 et intérieure 36 sont reliées par une portion intermédiaire 37 présentant une surface inclinée radialement vers l'intérieur 37a, et une surface opposée radiale 37b. La portion extérieure 35 comprend une surface radiale d'arrêt 38 du côté opposé à la surface radiale 37b de la portion intermédiaire 37.

La couronne d'appui 34 comprend une nervure axiale 39 s'étendant axialement à partir de la portion de la portion extérieure 35, du côté opposé à la surface radiale d'arrêt 38. La portion intérieure 36 comprend du côté de la surface radiale 37d de la portion intermédiaire 37 un bord intérieur arrondi, et du côté axialement opposé un bourrelet 40 en saillie axialement.

La portion intérieure 36 de la couronne 34 présente un diamètre intérieur supérieur au diamètre extérieur de la surface extérieure 25 de la bague de tolérance 24, tout en étant inférieur au diamètre d'un cercle passant par les extrémités radiales libres des crochets 31 de la bague de tolérance 24. La couronne 34 entoure la bague de tolérance 24, la portion intérieure 36 étant située axialement entre les crochets 31 et la bague intérieure 4 du palier à roulement 2. La surface radiale 37b de la portion intermédiaire 37 de la couronne 34 et orientée du côté de la bague extérieure 3 et se situe radialement en regard de la surface d'appui 22 du bourrelet 20 du manchon extérieur 16.

Un élément élastique sous la forme d'un ressort hélicoïdal 41 à spires à section rectangulaire mince dans le sens axial est disposé axialement entre la couronne d'appui 34 et le manchon extérieur 16, en venant en appui axialement d'un côté sur la surface radiale 37b de la portion intermédiaire 37 de la couronne d'appui 34, et du côté opposé sur la surface d'appui 22 du bourrelet 20 du manchon extérieur 16. Le ressort hélicoïdal présente un diamètre extérieur inférieur au diamètre intérieur de la nervure axiale 39 de la couronne 34 et inférieur au diamètre intérieur de la nervure axiale 23 du manchon extérieur 16. Les extrémités d'appui du ressort 41 sont entourées par les nervures axiales 23, 39 respectivement du manchon extérieur 16 et de la couronne 34.

Le ressort hélicoïdal 41 est prévu pour exercer un effort d'écartement du manchon extérieur 16 et de la couronne d'appui 34. Le manchon extérieur 16 vient en appui sur la bague extérieure 3 du palier à roulement 2 par l'intermédiaire de son bourrelet 20 en appui sur la portion toroïdale 7 et de son épaulement 19 en appui sur la collerette d'arrêt 11. L'effort axial est transmis de la bague extérieure 3 à la bague intérieure 4 par l'intermédiaire des éléments roulants 5. La bague intérieure 4 vient en appui sur le bourrelet radial 27 de la bague de tolérance 24. La bague intérieure 4 est retenue axialement sur la bague de tolérance 24. Du côté opposé, la couronne 34 est retenue par son bord intérieur par les crochets 31 de la bague de tolérance 24.

De préférence, on prévoit la longueur à l'état libre du ressort hélicoïdal 41 et la longueur axiale de la bague de tolérance 24 de façon que lorsque la couronne d'appui est retenue par les crochets 31, le ressort hélicoïdal 41 exerce un effort axial de précontrainte.

La couronne d'appui 34 peut coulisser librement sur la surface extérieure cylindrique 25 de la portion intermédiaire tubulaire de la bague de tolérance 24, et permet ainsi de comprimer plus ou moins l'élément élastique 41 pour obtenir en fonctionnement la précontrainte désirée.

Les languettes élastiques 30 facilitent le montage du dispositif de palier à roulement précontraint. On assemble dans un premier temps le roulement constitué par la bague extérieure 3, la bague intérieure 4, la cage 15 et les éléments roulants 5. On dispose ensuite le roulement ainsi formé dans le manchon extérieur 16 et on introduit la bague de tolérance 24 dans la bague intérieure 4. La bague intérieure 4 vient en contact par sa surface intérieure avec les surfaces inclinées 32 des crochets 31, provoquant l'application d'un effort radial dirigé vers l'intérieur sur les languettes 30. Les crochets 31 se rabattent radialement vers l'intérieur ce qui permet le passage de la bague intérieure 4. Après le passage de la bague intérieure 4, les crochets 31 relâchés reprennent lors position initiale. Ensuite, on peut disposer la cage 15 et les éléments roulants 5 sur le chemin de roulement toroïdal 14 de la bague intérieure 4. On amène le bourrelet radial 27 en contact avec la bague intérieure 4. Ensuite, on dispose le ressort hélicoïdal 41 en appui sur la surface d'appui 22 du manchon extérieur 16, puis on insère axialement la couronne d'appui 34.

Le bord intérieur rond de la couronne d'appui 34 coopère avec les surfaces inclinées 32 des crochets 31 pour permettre le passage de la couronne d'appui 34 par déformation radialement vers l'intérieur des languettes 30. Lorsque la couronne d'appui 34 est passée, les crochets 31 retrouvent leur position initiale. La couronne d'appui 34 est poussée axialement par le ressort hélicoïdal 41. Cependant, elle vient par son bord intérieur au contact avec les surfaces radiales 33 des crochets 31, ne permettant pas l'effacement des crochets 31 par déformation radialement vers l'intérieur des languettes 30. Ainsi, on a obtenu un dispositif de palier à roulement précontraint, se présentant sous la forme d'un ensemble modulaire indémontable pouvant être manipulé facilement par un opérateur lors de son montage.

On remarquera que les différents éléments sont agencés de façon que des moyens de retenue soient prévus seulement à une extrémité axiale de la bague de tolérance 24, outre le bourrelet radial 27 prévu pour la compensation des jeux radiaux, et permettent le maintien de l'ensemble.

On a décrit un élément élastique 41 sous la forme d'un ressort hélicoïdal à spires simples fabriquées par enroulement d'un bande métallique mince et plate. On peut également prévoir un ressort de forme plus complexe, par exemple un ressort hélicoïdal à spires ondulées avec contact crête-à-crête desdites ondulations. Dans ce type de ressorts, des ondulations sont formées sur les spires en étant espacées circonférentiellement, et en venant en saillie axialement entre les spires. Des ondulations de deux spires adjacentes viennent en direction l'une de l'autre, avec un contact des ondulations entre-elles par leurs extrémités ou crêtes. Ce type de ressort permet l'application d'un effort important avec une faible variation de longueur. Pour plus de renseignements, on pourra consulter le document US 4 901 987. Bien entendu, on pourrait prévoir d'autres types d'éléments élastiques, comme des rondelles Belleville.

Le dispositif de palier à roulement précontraint se présente sous la forme d'un ensemble précontraint compact comportant un unique roulement et un nombre de pièces réduit. La fabrication, et notamment un approvisionnement en pièces, est simplifiée.

L'assemblage de l'ensemble est en outre particulièrement aisé car il peut être réalisé par des opérations simples de positionnement et d'empilages des pièces, le tout étant maintenu finalement sous la forme d'un ensemble indémontable par un simple encliquetage de la couronne d'appui 34 sur la bague de tolérance 24.

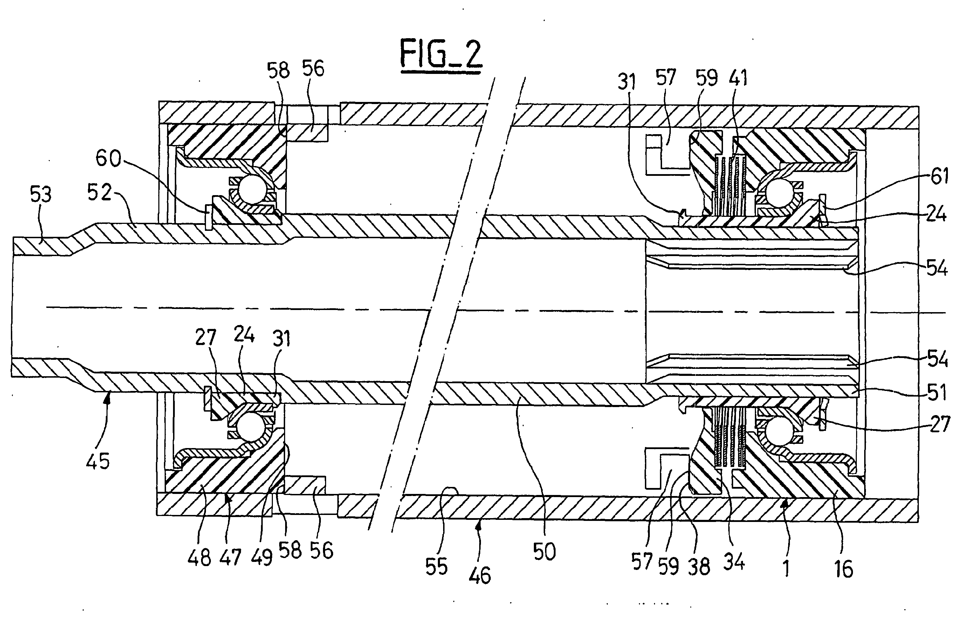

Sur la figure 2, où les références aux éléments semblables à ceux de la figure 1 ont été reprises, un ensemble mécanique comprend un arbre de colonne de direction 45 fixée à rotation dans un logement tubulaire 46 par l'intermédiaire d'un premier dispositif de palier à roulement précontraint 1 et d'un second dispositif de palier à roulement 47.

Le second dispositif de palier à roulement 47 est similaire au dispositif de palier à roulement précontraint 1, à ceci près qu'il est dépourvu d'une couronne d'appui 34 et d'un élément élastique. Le second dispositif de palier à roulement 47 comprend un manchon extérieur 48 terminé du côté de la portion toroïdale 7 de sa bague intérieure 3 par une surface radiale d'arrêt 49 située sensiblement dans un même plan radial que l'extrémité de la bague extérieure 4 de ce second dispositif de palier à roulement 47. Le second dispositif de palier à roulement 47 comprend une bague de tolérance 24 d'étendue axiale limitée et comprenant du côté opposé à un bourrelet radial 27 des crochets 31 de retenue venant en contact axialement avec le bord libre de la portion axiale 13 de la bague intérieure 4.

L'arbre de colonne 45 comprend une section centrale 50 de grand diamètre, une première portion latérale d'extrémité 51, de diamètre inférieur au diamètre de la portion centrale 50, et une seconde portion latérale 52, de diamètre extérieur identique à la première portion latérale 51, la seconde portion latérale 52 étant reliée à la surface extérieure de la section centrale 50 par une surface radiale formant un épaulement. Une extrémité de fixation 53 prolonge l'extrémité libre de la seconde portion latérale 52, pour la fixation d'un volant de commande. La première portion latérale 51 comprend sur sa surface intérieure des cannelures 54, qui ne sont pas toutes représentées pour des raisons de simplification du dessin, prévues pour une solidarisation angulaire de l'arbre de colonne 45 avec un autre arbre non représenté.

Le logement tubulaire 46 comprend un alésage 55, des premières pattes d'arrêt 56, dont deux sont visibles, se situant dans un même plan radial, et des secondes pattes d'arrêt 57, dont deux sont visibles, situées dans un même plan radial en étant situées à distance axialement des premières pattes d'arrêt 56. Les pattes d'arrêt 56 et 57 sont formées par découpe et déformation locale de la paroi du logement tubulaire 46. Les premières pattes d'arrêt 56 comprennent des surfaces radiales d'arrêt 58 orientées du côté opposé aux secondes pattes d'arrêt 57, et les secondes pattes d'arrêt 57 comprennent des surfaces radiales d'arrêt 59 orientées du côté opposé aux premières pattes d'arrêt 56.

Le second dispositif de palier à roulement 47 est disposé sur l'arbre de colonne 45, la bague de tolérance 24 du second dispositif de palier à roulement 47 étant ajustée sur la surface extérieure cylindrique de la seconde portion latérale 52 et coulissée axialement jusqu'à venir en contact avec l'épaulement formé entre la portion centrale 50 et la seconde portion latérale 52. Un mouvement axial en sens opposé de la bague de tolérance 24 est empêché par un anneau élastique 60 disposé dans une gorge ménagée sur la surface extérieure de la seconde portion latérale 52. Ainsi, la bague de tolérance 24 est immobilisée axialement sur la seconde portion latérale 52.

Le second dispositif de palier à roulement 47 est inséré dans le logement tubulaire 46, le manchon extérieur 48 étant ajusté par sa surface extérieure cylindrique dans l'alésage 55 du logement tubulaire 46 jusqu' à venir en contact par la surface radiale frontale 49 avec les surfaces radiales d'arrêt 58 des premières languettes 56.

Le dispositif de palier à roulement précontraint 1 est positionné radialement entre la première portion latérale 51 de l'arbre de colonne 45 et le logement tubulaire 46 en étant inséré axialement du côté de la colonne 53 du côté opposé au second dispositif de palier à roulement 57. La bague de tolérance 24 est ajustée sur la surface extérieure cylindrique de la première portion latérale 51, le manchon extérieur 16 étant ajusté dans l'alésage 55 du logement tubulaire 46. La couronne d'appui 34 se situe axialement du côté du second dispositif de palier à roulement 47.

Pour sa mise en place du premier, le dispositif de palier à roulement précontraint 1 est introduit axialement sur l'arbre de colonne 45 et dans le logement 46 en poussant sur la bague de tolérance 24, de sorte que la couronne d'appui 34 vienne en contact par sa surface radiale d'appui 38 sur les surfaces d'arrêt 59 des languettes 57. Le dispositif de palier à roulement 1 est encore avancé, de sorte que la bague extérieure 4 et le manchon extérieur 16 se rapprochent axialement de la couronne d'appui 34 qui est retenue par les surfaces d'arrêt 59. La couronne d'appui 34 n'est plus en contact avec les crochets 31 de retenue de la bague de tolérance 24, et le ressort 41 se comprime. On arrête de pousser sur la bague de tolérance 24 lorsque celle-ci atteint une position axiale prédéterminée sur la première portion latérale 51 de l'arbre 45 correspondant à la valeur de précontrainte voulue pour le ressort 41. Une rondelle-frein 61 est ajustée sur la première portion latérale 51 en venant en appui sur le bourrelet radial 27 de la bague de tolérance 24 pour maintenir la bague de tolérance 24 dans sa position axiale finale sur l'arbre 45, et ainsi la bague intérieur 3 et le dispositif de palier à roulement précontraint 1.

On remarquera que la couronne d'appui 34 comprend un diamètre extérieur sensiblement inférieur au diamètre de l'alésage 55 pour ne pas gêner l'insertion du premier dispositif de palier à roulement précontraint dans le logement tubulaire 46 et permettre à ladite couronne d'appui 34 de coulisser sur la bague de tolérance 24 après que le palier soit en place dans le logement tubulaire 46.

La couronne d'appui 34 permet de reprendre des efforts entre le logement tubulaire 46, au niveau des languettes 57, pour appliquer un effort axial sur le manchon extérieur 16, et donc la bague extérieure 3 du dispositif de palier à roulement précontraint 1. L'effort axial exercé par le ressort 41 est transmis par l'intermédiaire du palier à roulement 1 vers la bague de tolérance 24 et la rondelle-frein 61. L'effort axial tend à exercer un effort axial sur la colonne 53 dirigé du côté opposé au second dispositif de palier à roulement 47. Ce dernier est disposé en opposition par rapport au premier dispositif de palier à roulement précontraint 1. Le second dispositif de palier à roulement 47 est retenu dans le logement tubulaire 46 par les premières pattes 56. L'effort axial exercé par le ressort de précontrainte 41 se transmet donc au deuxième dispositif de palier à roulement 47 par l'intermédiaire de l'arbre de colonne 45 et de l'anneau élastique 60. Ainsi, l'utilisation d'un dispositif de palier à roulement précontraint 1 permet d'exercer une précontrainte de façon satisfaisante sur les deux dispositifs de palier à roulement utilisés pour la fixation à rotation de l'arbre de colonne 45 dans le logement tubulaire 46.

On notera qu'un effort axial de précontrainte est récupéré par la couronne d'appui 34 pour être transmis directement à la bague extérieure 3 du dispositif de palier à roulement précontraint 1, la bague intérieure étant retenue axialement par l'intermédiaire de la bague de tolérance 24 et de la rondelle-frein 61. Dès lors, pour la mise en précontrainte des dispositifs de palier à roulement, il n'est pas nécessaire de prévoir un élément élastique disposé entre la bague intérieure et une surface d'appui distante pouvant être prévue sur un autre élément de l'ensemble mécanique.

On obtient ainsi un ensemble mécanique compact et précontraint, pouvant être livré sous la forme d'un ensemble modulaire prêt à être monté dans un véhicule automobile, par exemple.

Les éléments de précontrainte du dispositif de palier à roulement précontraint 1, que sont la couronne d'appui 34 et le ressort 41, sont situés axialement en avant du dispositif de palier à roulement 1. En d'autres termes, ces éléments sont disposés par rapport au roulement vers l'intérieur du logement tubulaire, c'est-à-dire qu'ils sont situés du côté du roulement axialement opposé à l'extrémité axiale du logement tubulaire 46, au niveau de laquelle est logé le dispositif de palier à roulement précontraint. Cette disposition permet d'intégrer complètement le dispositif de palier à roulement précontraint 1 dans le logement tubulaire 46, tout en disposant le roulement à proximité ou affleurant à l'extrémité axiale du logement tubulaire 46, sans laisser de partie dépassant à l'extrémité du logement tubulaire 46. On réalise ainsi un gain en encombrement axial, tout en conservant un guidage en rotation satisfaisant d'une colonne de direction.

En outre, l'utilisation d'un manchon extérieur permettant une adaptation de la bague extérieure 3 du dispositif de palier à roulement précontraint 1 dans le logement 46 permet d'adapter facilement un diamètre extérieur en fonction du logement tubulaire prévu.

Bien entendu, on peut prévoir que le dispositif de palier à roulement soit dénué de manchon extérieur, et que l'élément élastique vienne en appui directement sur la bague extérieure 4, et que la bague extérieure soit ajustée directement dans le logement tubulaire 46. Dans ce cas, la bague extérieure pourra être munie d'une surface d'appui apte à coopérer avec l'élément élastique.

Ainsi, le dispositif de palier à roulement précontraint pourra être utilisé dans différents ensembles mécaniques, en ne nécessitant qu'une adaptation peu importante, portant essentiellement sur le manchon extérieur et la couronne d'appui, ainsi que la bague de tolérance, qui peuvent être obtenus facilement en matière synthétique par injection.

Grâce à l'invention, on obtient un dispositif de palier à roulement précontraint, compact axialement, de montage simple, facile à manipuler et transporter sans risque de démontage et de perte de pièces, et permettant l'obtention d'ensembles mécaniques simples précontraints. Le dispositif de palier à roulement précontraint peut facilement être adapté selon l'usage qui en est fait.

## Revendications

1. Dispositif de palier à roulement précontraint, notamment pour colonne de direction de véhicule automobile, comprenant une bague extérieure (3) munie d'un chemin de roulement (10), une bague intérieure (4) munie d'un chemin deroulement (14), des éléments roulants (5) disposés entre les chemins de roulement (10, 14) des bagues intérieure et extérieure (3, 4), une couronne d'appui (34) mobile axralemeht par rapport aux baguesintérieure et extérieure (3, 4), *une bague de tolérance (24)* et un élément élastique (41), ***caractérisé par le fait que** l'élément élastique (41) est disposé* entre la couronne d'appui (34) et une surface d'appui associée à la bague extérieure (3) pour exercer un effort axial d'écartement entre la couronne d'appui (34) et la bague extérieure (3), un écartement axial entre la couronne d'appui et la bague extérieure étant limité par des moyens de retenue (31) associés à la bague intérieure (4), *la bague de tolérance (24) traverse la bague intérieure (4), pour la liaison de la bague intérieure avec un arbre, la bague de tolérance (24) traversant la couronne d'appui (34) et comprend des moyens de retenue (31) de la couronne d'appui (34) du côté de la couronne d'appui (34) opposé à la bague intérieure (4) et la bague de tolérance (24) comprend un bourrelet radial (27) du côté de la bague intérieure (4) opposé à la couronne (34).*

2. Dispositif selon la revendication 1, **caractérisé par le fait que** la bague de tolérance (24) comprend des crochets (31) dirigés vers l'extérieurà partir d'une extrémité de la bague de tolérance (24).

3. Dispositif selon l'une quelconque des revendications précédentes, **caractérisé par le fait que** la bague extérieure (3) est disposée dans un manchon extérieur (16) prévu pour être ajusté dans un logement tabulaire.

4. Dispositif selon la revendication 3, **caractérisé par le fait que** l'élément élastique (41) est en appui sur une surface (22) du manchon extérieur (16) orienté du côté de la couronne d'appui (34).

5. Dispositif selon l'une quelconque des revendications précédentes, **caractérisé par le fait que** la couronne d'appui (34) comprend une surface d'appui (38) prévue pour un contact avec un support et orientée du côté opposé à la bague extérieure (3).

6. Dispositif selon l'une quelconque des revendications précédentes, **caractérisé par le fait qu'**il comprend un ressort hélicoïdal (41).

7. Dispositif selon la revendication 6, **caractérisé par le fait que** le ressort hélicoïdal est à spires ondulées avec contact crête à crête.

8. Ensemble mécanique comprenant une colonne (50), un logement tubulaire (46), un palier à roulement disposé entre le logement tubulaire et la colonne (47), le logement tubulaire et la colonne comprenant des moyens de retenue du palier à roulement (56), et un dispositif de palier à roulement précontraint (1), selon l'une quelconque des revendications précédentes, disposé entre le logement tubulaire et la colonne.

9. Ensemble selon la revendication 8, **caractérisé par le fait qu'**une couronne d'appui (34) du dispositif de palier à roulement précontraint (1) est en contact du côté opposé à la bague extérieure avec une surface d'arrêt (59) du logement tubulaire, la bague intérieure (4) étant retenue sur la colonne du côté opposé à la couronne d'appui (34) par l'intermédiaire d'une rondelle-frein (61).

## Claims

1. Preloaded rolling bearing device, in particular for a motor vehicle steering column, comprising an outer race (3) provided with a raceway (10), an inner race (4) provided with a raceway (14), rolling elements (5) arranged between the raceways (10, 14) of the inner and outer races (3, 4), a bearing ring (34) which can move axially with respect to the inner and outer races (3, 4), a tolerance ring (24) and an elastic element (41), **characterized in that** the elastic element (41) is arranged between the bearing ring (34) and a bearing surface associated with the outer race (3) so as to exert an axial spacing force between the bearing ring (34) and the outer race (3), axial spacing between the bearing ring and the outer race being limited by retaining means (31) associated with the inner race (4), the tolerance ring (24) passes through the inner race (4) in order to connect the inner race to a shaft, the tolerance ring (24) passes through the bearing ring (34) and comprises means (31) for retaining the bearing ring (34) on that side of the bearing ring (34) facing away from the inner race (4), and the tolerance ring (24) comprises a radial flange (27) on that side of the inner race (4) facing away from the bearing ring (34).

2. Device according to Claim 1, **characterized in that** the tolerance ring (24) comprises hooks (31) which are directed outwardly from one end of the tolerance ring (24).

3. Device according to either one of the preceding claims, **characterized in that** the outer race (3) is arranged in an outer sleeve (16) intended to be fitted into a tubular housing.

4. Device according to Claim 3, **characterized in that** the elastic element (41) bears on a surface (22) of the outer sleeve (16) directed towards the bearing ring (34).

5. Device according to any one of the preceding claims, **characterized in that** the bearing ring (34) comprises a bearing surface (38) intended for contact with a support and directed away from the outer race (3).

6. Device according to any one of the preceding claims, **characterized in that** it comprises a helical spring (41).

7. Device according to Claim 6, **characterized in that** the helical spring has wavy turns with crest-to-crest contact.

8. Mechanical assembly comprising a column (50), a tubular housing (46), a rolling bearing (47) arranged between the tubular housing and the column, the tubular housing and the column comprising means (56) for retaining the rolling bearing, and a preloaded rolling bearing device (1), according to any one of the preceding claims, arranged between the tubular housing and the column.

9. Assembly according to Claim 8, **characterized in that** a bearing ring (34) of the preloaded rolling bearing device (1) is in contact, on the opposite side to the outer race, with a stop surface (59) of the tubular housing, the inner race (4) being retained on the column, on the opposite side to the bearing ring (34), by means of a lock washer (61).

## Patentansprüche

1. Vorgespannte Lageranordnung, insbesondere für die Lenksäule von Kraftfahrzeugen, zu der gehören: ein mit einer Lagerlauffläche (10) versehener Außenring (3), ein mit einer Lagerlauffläche (14) versehener Innenring (4), zwischen den Lagerlaufflächen (10, 14) des Innen- und Außenrings (3, 4) angeordnete Wälzelemente (5), ein in axialer Richtung gegenüber dem Innen- und Außenring (3, 4) verschiebbaren Stützring (34), ein Ausgleichsring (24) und ein elastisches Element (41), **dadurch gekennzeichnet, dass** das elastische Element (41) zwischen dem Stützring (34) und einer dem Außenring (3) zugeordneten Anlagefläche angeordnet ist, um zwischen dem Stützring (34) und dem Außenring (3) eine axiale Spreizkraft auszuüben, wobei ein axiales Spreizen zwischen dem Stützring und dem Außenring durch Haltemittel (31) begrenzt ist, die dem Innenring (4) zugeordnet sind, wobei der Ausgleichsring (24) für die Verbindung des Innenrings mit einer Welle durch den Innenring (4) hindurchführt, der Ausgleichsring (24) sich durch den Stützring (34) erstreckt und auf der dem Innenring (4) gegenüberliegenden Seite des Stützringes (34) Haltemittel (31) für den Stützring (34) aufweist, und der Ausgleichsring (24) auf der dem Kranz (34) gegenüberliegenden Seite des Innenrings (4) einen radialen Wulst (27) aufweist.

2. Einrichtung nach Anspruch 1, **dadurch gekennzeichnet, dass** der Ausgleichsring (24) Haken (31) aufweist, die ausgehend von einem Ende des Ausgleichsrings (24) nach außen gerichtet sind.

3. Einrichtung nach einem der vorhergehenden Ansprüche, **dadurch gekennzeichnet, dass** der Außenring (3) in einer äußeren Hülse (16) angeordnete ist, die dazu eingerichtet ist, in einen rohrförmigen Sitz zu passen.

4. Einrichtung nach Anspruch 3, **dadurch gekennzeichnet, dass** das elastische Element (41) sich auf der dem Stützring (34) zugewandten Seite an einer Fläche (22) der äußeren Hülse (16) abstützt.

5. Einrichtung nach einem der vorhergehenden Ansprüche, **dadurch gekennzeichnet, dass** der Stützring (34) eine Anlagefläche (38) aufweist, die für eine Berührung mit einer Stütze vorgesehen ist und von dem Außenring (3) wegzeigend orientiert ist.

6. Einrichtung nach einem der vorhergehenden Ansprüche, **dadurch gekennzeichnet, dass** zu dieser eine Schraubenfeder (41) gehört.

7. Einrichtung nach Anspruch 6, **dadurch gekennzeichnet, dass** die Schraubenfeder wellenförmige Windungen mit Berührung Wellenberg an Wellenberg aufweist.

8. Mechanische Vorrichtung, zu der gehören: eine Säule (50), ein rohrförmiger Sitz (46), ein zwischen dem rohrförmigen Sitz und der Säule (47) angeordnetes Wälzlager, wobei der rohrförmige Sitz und die Säule Mittel zur Befestigung an dem Wälzlager (56) aufweisen, und eine vorgespannte Lageranordnung (1) nach einem der vorhergehenden Ansprüche, die zwischen dem rohrförmigen Sitz und der Säule angeordnet ist.

9. Einheit nach Anspruch 8, **dadurch gekennzeichnet, dass** ein Stützring (34) der vorgespannten Lageranordnung (1) auf der dem Außenring abgewandten Seite mit einer Anlagefläche (59) des rohrförmigen Sitzes in Berührung steht, wobei der Innenring (4) auf der dem Stützring (34) abgewandten Seite mittels einer Sicherungsscheibe (61) an der Säule gehalten wird.
